# EUROPÄISCHE PATENTSCHRIFT

(11) **EP 1 850 093 B1**
(45) Veröffentlichungstag und Bekanntmachung des Hinweises auf die Patenterteilung: **17.03.2010**
(21) Anmeldenummer: 07008538.6
(22) Anmeldetag: 26.04.2007
(51) Int. Cl.: G01D 5/14

(54) **Drehwinkelsensor auf magnetosensitiver Basis**
Rotation angle sensor on magnetosensitive basis
Capteur d'angle de rotation sur base magnétosensible

(30) Priorität: 27.04.2006 DE 102006020254
(43) Veröffentlichungstag der Anmeldung: 31.10.2007
(73) Patentinhaber: Hirschmann Automotive GmbH, 6830 Rankweil-Brederis (AT)
(72) Erfinder: Dobler, Daniel, 6800 Feldkirch (AT); Moosmann, Alexander, 6850 Dornbim (AT)
(74) Vertreter: Dietrich, Barbara

(56) Entgegenhaltungen:
- WO-A-03/004973
- US-A- 5 729 128
- US-A- 5 982 170

## Beschreibung

Die Erfindung betrifft eine Sensoranordnung, die zur Erfassung rotatorischer Bewegungen von Messobjekten ausgebildet Ist, mit zumindest einem Magneten sowie einem magnetosensitiven Sensor, gemäß den Merkmalen des Oberbegriffes des Patentanspruches 1.

Solche Drehwinkel-Sensoranordnungen, die auf magnetosensitiver Basis, insbesondere mittels Hall-Sonden, funktionieren, sind grundsätzlich bekannt. Derzeit werden Insbesondere große zu erfassende Winkelbereiche (zum Beispiel 270 Grad) nur mit aufwendigen und kostenintensiven Drehwinkel-Systemen realisiert. Außerdem sind für die Abdeckung solch großer Winkelbereiche mehr als nur ein magnetosensitiver Sensor erforderlich.

Aus der WO 03/004973 A1 ist eine Sensoranordnung bekannt, die zur Erfassung rotatorischer Bewegungen von Messobjekten ausgebildet ist, wobei die Sensoranordnung zwei konzentrisch ineinander angeordnete Magnete sowie zwei planare und im rechten Winkel zueinander angeordnete magnetoresistive Sensoren aufweist. Ein Magnetfeldgeber aus einem spritzgegossenen Kunststoff ist nicht vorhanden.

Die US 5,982,170 beschreibt eine Sensoranordnung, bei der ein Sensor in einem Luftspalt zwischen zwei Magneten angeordnet ist, wobei der Sensor an einer Stelle zwischen der ersten und der zweiten Innenposition der der ersten und der zweiten Aussenkante der ersten und des zweiten Magneten positioniert ist.

Der Erfindung liegt die Aufgabe zugrunde, eine Sensoranordnung, die zur Erfassung rotatorischer Bewegungen von Messobjekten ausgebildet ist, bereit zu stellen, die auch große Winkelbereiche ohne hohen Aufwand und kostengünstig erfassbar macht.

Diese Aufgabe ist durch die Merkmale des Patentanspruches 1 gelöst.

Erfindungsgemäß ist vorgesehen, dass der Magnet in einem Magnetfeldgeber eingebettet und kreisförmig ausgebildet Ist, wobei sich der Querschnitt des Magneten in Umfangsrichtung stetig ändert. Damit ist es möglich, mit nur einer Drehbewegung (über 360 Grad) oder auch mehreren Drehbewegungen, die aufeinander folgen, einen entsprechend großen Winkelbereich zu erfassen. Gleichzeitig bleibt der Aufbau der Sensoranordnung einfach und kostengünstig, da der Magnet (entweder ein permanenter Dauermagnet aus metallischem Werkstoff oder Kunststoff oder einer entsprechenden Legierung oder ein Elektromagnet) geschützt in dem Magnetfeldgeber eingebettet ist. Dadurch ist es ohne weiteres möglich, den Magnetfeldgeber an dem Messobjekt zu befestigen, wobei es alternativ auch denkbar ist, dass das Messobjekt selber den Magnetfeldgeber bildet. In erfindungsgemäßer Weise ist der Magnetfeldgeber aus einem spritzgegossenen Kunststoff hergestellt und wird als separate Einheit an dem Messobjekt befestigt oder schon mit der Herstellung des Messobjektes selber hergestellt.

Weiterhin ist erfindungswesentlich, dass sich der Querschnitt des Magneten in Umfangsrichtung stetig ändert. Dabei wird je nach Signalauswertung der sich in Umfangsrichtung stetig ändernde Querschnitt so gewählt, dass er sich in Umfangsrichtung, also in seinem radialen Verlauf, stetig linear oder alternativ stetig nicht linear verändert. Dies hat zur Folge, dass sich das Ausgangssignal des magnetosensitiven Sensors, beispielsweise der Hall-Sonde, je nach Drehrichtung ansteigt oder abfällt, bis es zu einem Sprung kommt, bei dem sich der Verlauf des Ausgangssignals wieder umkehrt.

Mit der erfindungsgemäßen Anordnung können somit Winkelbereiche bis zu 360 Grad bei einfachem Aufbau der Anordnung gemessen werden.

Eine bevorzugte Anwendung ist in der Fahrzeugtechnik zu sehen, hier insbesondere bei Personen- oder Lastkraftwagen, genauso wie bei Arbeitsfahrzeugen (automotive Winkelmaessung). Beispielhaft sei die Messung des Anstellwinkels einer Heckklappe eines Personenkraftwagens genannt. Mit der erfindungsgemäßen Anordnung wird es somit bei vereinfachtem Aufbau ermöglicht, die Stellung der Heckklappe zu ermitteln. Dies ist gerade dann wichtig, um nicht nur die Endstellungen (geschlossen oder geöffnet) zu erfassen, sondern auch eine Vorverraststellung. Diese liegt vor, wenn der Benutzer des Fahrzeuges die Heckklappe nahezu geschlossen hat (die Drehfalle der Heckklappe befindet sich dann in vorveriegelter Stellung) und eine motorbetriebene Anordnung die Heckklappe in ihre geschlossene und damit endgültig verriegelte Position bringt (sogenannte Zuziehhilfe). Gleiches gilt auch für eine motorbetriebene Tür oder Heckklappe, die mittels Motorkraft nicht nur in die geschlossene, sondernauch in die geöffnete Stellung gebracht werden kann.

Zwei Ausführungsbeispiele einer erfindungsgemäßen Sensoranordnung, auf die die Erfindung jedoch nicht beschränkt ist, sind im Folgenden erläutert und anhand der Figuren gezeigt.

Es zeigen:
- Figur 1:: eine Sensoranordnung mit einem Magneten mit sich in Umfangsrichtung stetig ändernden Querschnitt, wobei der magnetosensitive Sensor an der senkrecht zu der Rotationsachse des Magneten weisenden Stirnfläche des Magneten angeordnet ist,
- Figur 2:: eine Sensoranordnung mit einem Magneten mit sich in Umfangsrichtung stetig ändernden Querschnitt, wobei der magnetosensitive Sensor an der parallel zu der Rotationsachse des Magneten weisenden Stirnfläche des Magneten angeordnet ist.

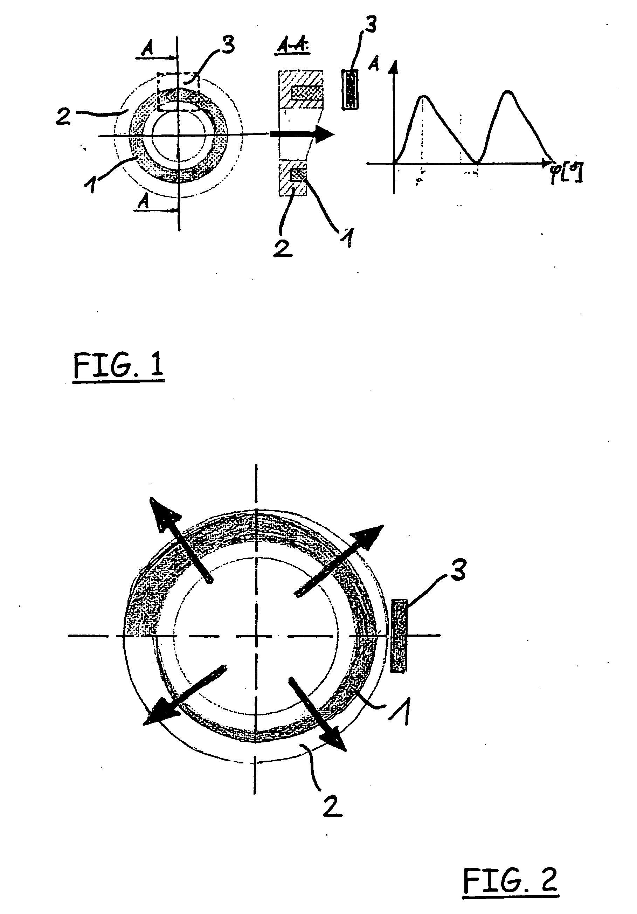

Figur 1 zeigt, soweit im Einzelnen dargestellt, eine Sensoranordnung, die zur Erfassung rotatorischer Bewegungen von Messobjekten (hier nicht näher dargestellt) ausgebildet ist. Es ist ein kreisförmiger Magnet 1 vorhanden, der in einen Magnetfeldgeber 2 eingebettet ist (siehe mittlere Darstellung der Figur 1, Schnitt A-A von der linken Darstellung der Figur 1). In dieser mittleren Darstellung ist erkennbar, dass der Magnet 1 (kreuzschraffiert) in den Magnetfeldgeber 2 (schraffiert) eingebettet ist. Die Stirnflächen senkrecht zu der Rotationsachse des Gebers (gebildet durch die Elemente 1 und 2) ist nicht von dem Magnetfeldgeber 2 umgeben, kann es aber sein. Dieser Stirnfläche des Magneten 1 ist ein magnetosensitiver Sensor 3, beispielsweise ein Hall-Sensor, zugeordnet. Bei Drehung des Messobjektes wird diese rotatorische Bewegung von dem magnetosensitiven Sensor 3 erfasst, der ein beispielhaftes Ausgangssignal abgibt, wie es in der rechten Darstellung der Figur 1 abgebildet ist. Auf der X-Achse ist der Rotationswinkel 4 in Grad und auf der Y-Achse die Amplitude des Ausgangssignals A des magnetosensitiven Sensors 3 abgebildet. In dieser Ausführungsform ist der magnetosensitive Sensor 3 senkrecht zu der Rotationsachse des Magneten (1) weisenden Stirnfläche des Magneten 1 angeordnet.

Das bedeutet, dass der magnetosensitive Sensor 3 auch seitlich von dem Magneten 1 angebracht werden kann, wie dies gezeigt ist. Dabei ist dann die Wendelform entsprechend nach außen hin ausgeprägt und die Magnetisierung dementsprechend gewählt.

Als mögliche Ausgangssignale der Sensoranordnung kommen analoge Ausgangsspannungen in Betracht. Daneben ist es denkbar, eine Schnittstelle der Sensoranordnung bereit zu stellen, an der spannungs- oder stromabhängige Pulsweiten modulierte Signale abgegeben werden.

### Bezugszeichenliste

1. Magnet
2. Magnetfeldgeber
3. magnetosensitiver Sensor

## Patentansprüche

1. Sensoranordnung, die zur Erfassung rotatorischer Bewegungen von Messobjekten ausgebildet ist, mit zumindest einem Magneten (1) sowie einem magnetosensitiven Sensor (3), **dadurch gekennzeichnet, dass** der Magnet (1) in einem Magnetfeldgeber (2) eingebettet und kreisförmig ausgebildet ist, wobei sich der Querschnitt des Magneten in (1) Umfangsrichtung stetig ändert, wobei der Magnetfeldgeber (2) aus einem spritzgegossenen Kunststoff besteht.

2. Sensoranordnung nach Anspruch 1, **dadurch gekennzeichnet, dass** sich der Querschnitt in Umfangsrichtung stetig linear verändert.

3. Sensoranordnung nach Anspruch 1, **dadurch gekennzeichnet, dass** sich der Querschnitt in Umfangsrichtung stetig nicht linear verändert.

4. Sensoranordnung nach einem der vorhergehenden Ansprüche, **dadurch gekennzeichnet, dass** der magnetosensitive Sensor (3) an der parallel zu der Rotationsachse des Magneten (1) weisenden Stirnfläche des Magneten (1) angeordnet ist.

5. Sensoranordnung nach einem der vorhergehenden Ansprüche, **dadurch gekennzeichnet, dass** der magnetosensitive Sensor (3) an der senkrecht zu der Rotationsachse des Magneten (1) weisenden Stirnfläche des Magneten (1) angeordnet ist.

6. Sensoranordnung nach einem der vorhergehenden Ansprüche, **dadurch gekennzeichnet, dass** der Magnetfeldgeber (2) ein separates Bauteil bildet oder Bestandteil des Messobjektes ist.

## Claims

1. Sensor arrangement which is designed to detect rotational movements of measurement objects, having at least one magnet (1) as well as a magnetosensitive sensor (3), **characterized in that** the magnet (1) is embedded in a magnetic field sensor (2) and is circular, the cross section of the magnet (1) continuously changing in the circumferential direction, the magnetic field sensor (2) being composed of an injection-moulded plastic.

2. Sensor arrangement according to Claim 1, **characterized in that** the cross section continuously changes in a linear manner in the circumferential direction.

3. Sensor arrangement according to Claim 1, **characterized in that** the cross section continuously changes in a non-linear manner in the circumferential direction.

4. Sensor arrangement according to one of the preceding claims, **characterized in that** the magnetosensitive sensor (3) is arranged on that end face of the magnet (1) which is parallel to the axis of rotation of the magnet (1).

5. Sensor arrangement according to one of the preceding claims, **characterized in that** the magnetosensitive sensor (3) is arranged on that end face of the magnet (1) which is perpendicular to the axis of rotation of the magnet (1).

6. Sensor arrangement according to one of the preceding claims, **characterized in that** the magnetic field sensor (2) forms a separate component or is part of the measurement object.

## Revendications

1. Système de détecteur configuré pour détecter des déplacements de rotation d'objets mesurés et présentant au moins un aimant (1) ainsi qu'un détecteur magnétosensible (3),
**caractérisé en ce que**
l'aimant (1) est incorporé dans un émetteur (2) de champ magnétique et a une forme circulaire, la section transversale de l'aimant variant de façon continue (1) le long de sa périphérie, l'émetteur (2) de champ magnétique étant constitué d'une matière synthétique moulée par injection.

2. Système de détecteur selon la revendication 1, **caractérisé en ce que** la section transversale varie de manière continue et linéaire le long de la périphérie.

3. Système de détecteur selon la revendication 1,
**caractérisé en ce que** la section transversale varie de manière continue mais non linéaire le long de la périphérie.

4. Système de détecteur selon l'une des revendications précédentes, **caractérisé en ce que** le détecteur magnétosensible (3) est disposé sur la surface frontale de l'aimant (1) orientée parallèlement à l'axe de rotation de l'aimant (1).

5. Système de détecteur selon l'une des revendications précédentes, **caractérisé en ce que** le détecteur magnétosensible (3) est disposé sur la surface frontale de l'aimant (1) orientée perpendiculairement à l'axe de rotation de l'aimant (1).

6. Système de détecteur selon l'une des revendications précédentes, **caractérisé en ce que** l'émetteur (2) de champ magnétique forme un composant distinct ou fait partie de l'objet à mesurer.
